# EUROPÄISCHE PATENTANMELDUNG

(11) **EP 2 466 567 A2**
(43) Veröffentlichungstag der Anmeldung: **20.06.2012**
(21) Anmeldenummer: 11187683.5
(22) Anmeldetag: 03.11.2011
(51) Int. Cl.: G08G 1/16, B60R 1/00, G05D 1/02

(54) **Verfahren und Vorrichtung zur Ermittlung fahrzeugbezogener Daten**

(30) Priorität: 14.12.2010 DE 102010062994
(71) Anmelder: Robert Bosch GmbH, 70442 Stuttgart (DE)
(72) Erfinder: Scheuerle, Mariia, 71711 Murr (DE); Scheuerle, Thomas, 71711 Murr (DE)

(57) **Zusammenfassung**

Die Erfindung betrifft ein Verfahren zur Ermittlung fahrzeugbezogener Daten, wobei Bilddaten mittels einer Rückkamera erfasst werden. Die Rückkamera ist hierbei in eine rückwärtige Umgebung eines Ego-Fahrzeugs ausgerichtet. Aus den Bilddaten werden durch Verarbeitung mindestens eines Bildes der Rückkamera oder einer Bildsequenz der Rückkamera die fahrzeugbezogenen Daten ermittelt.

Die Erfindung betrifft ferner eine Vorrichtung zur Ermittlung fahrzeugbezogener Daten mit einer Rückkamera. Diese ist zur rückwärtigen Befestigung an einem Fahrzeug vorgesehen. Die Vorrichtung umfasst ferner eine Bildverarbeitungseinrichtung, vorzugsweise eine programmierbare Bildverarbeitungseinrichtung, die mit der Rückkamera verbunden ist, um von dieser mindestens ein Bild oder eine Bildsequenz zu empfangen. Die Bildverarbeitungseinrichtung ist zur Ausführung des erfindungsgemäßen Verfahrens ausgebildet.

## Beschreibung

### Stand der Technik

Auf dem Gebiet der Fahrzeugtechnik ist es bekannt, Rückspiegel zu verwenden, um dem Fahrer Einblick in die Verkehrssituation zu verschaffen, die hinter dem Fahrzeug vorliegt. Jedoch sind die Blickwinkel sehr beschränkt, insbesondere aufgrund der Fahrzeuggeometrien und aufgrund von Heckbereichen, die wegen der Kontur des Fahrzeugs nicht direkt einsehbar sind.

Um insbesondere Heckbereiche sichtbar zu machen, die bei hochgezogenen Heckpartien und/oder bei langgestreckten Fahrzeugen nicht einsehbar sind, werden Rückkameras verwendet. Diese sind entgegen der Fahrtrichtung angeordnet und am Heck des Fahrzeugs befestigt. Die Rückkameras werden verwendet, um die Bildinformation, die sich nicht durch Spiegel erhalten lässt, elektronisch zu erfassen. Die elektronisch erfassten Bilddaten werden dem Fahrer am Cockpit dargestellt, so dass dieser die Situation am Heck des Fahrzeugs vollständig überblicken kann.

Es ist jedoch für den Fahrer schwierig, gleichzeitig den Überblick über die Situation in Fahrtrichtung zu behalten, während die rückwärtige Verkehrssituation betrachtet wird, und umgekehrt. Da ferner die Darstellung der Verkehrssituation am Heck des Fahrzeugs notwendigerweise nur einen kleinen Bereich des Cockpits bzw. der Frontscheibe einnehmen kann, ist es schwierig für den Fahrer, die wesentlichen Daten und einzelne Gefahrensituationen aus den Bilddaten sicher zu erfassen.

Es ist daher eine Aufgabe der Erfindung, eine Möglichkeit vorzusehen, mit der die rückwärtige Verkehrssituation eines Fahrzeugs sicherer erfasst werden kann.

### Offenbarung der Erfindung

Diese Aufgabe wird gelöst durch die Gegenstände der unabhängigen Ansprüche.

Der Gegenstand der Erfindung ermöglicht eine automatische Verarbeitung der Bilddaten, um relevante fahrzeugbezogene Daten aus den Bilddaten zu extrahieren. Dadurch ist es nicht erforderlich, dass der Fahrer selbst sämtliche sicherheitsrelevanten Aspekte aus dem rückwärtigen Bild extrahiert und daraus Schlüsse zieht. Vielmehr ist es möglich, einige automatische Reaktionen ohne Zutun des Fahrers hervorzurufen, beispielsweise wenn eine gefährdende Situation automatisch mittels des erfindungsgemäßen Verfahrens erkannt wurde. Weiterhin sind die dem Fahrer präsentierten Daten deutlich vereinfacht und nicht an ein graphisches, hochauflösendes Medium gebunden. Stattdessen können Daten beispielsweise auch akustisch abgegeben werden, insbesondere anhand von Warnsignalen. Die bildgestützte Erfassung des rückwärtigen Bereichs des Fahrzeugs ermöglicht ferner eine Unterstützung von bereits vorhandenen Systemen, beispielsweise von Einparksystemen oder von Geschwindigkeitserfassungssystemen. Insbesondere können unterschiedliche Aspekte getrennt voneinander untersucht werden. Beispielsweise können andere Fahrzeuge, fest stehende Objekte in der rückwärtigen Umgebung und weitere Objekte, die an dem Fahrzeug befestigt sind, getrennt voneinander untersucht werden.

Weiterhin lässt sich die Erfindung mit üblichen Mitteln realisieren, wobei ferner bereits vorhandene Rückkameras verwendet werden können, um die fahrzeugbezogenen Daten erfindungsgemäß zu ermitteln.

Das Fahrzeug, dessen rückwärtige Umgebung mittels der Rückkamera betrachtet wird, wird als Ego-Fahrzeug bezeichnet. Erfindungsgemäß erfasst eine Rückkamera Bilddaten, um daraus fahrzeugbezogene Daten zu ermitteln. Die Rückkamera ist an dem Ego-Fahrzeug angeordnet, wobei sich die zu ermittelnden fahrzeugbezogenen Daten, etwa ein Abstand zu dem Ego-Fahrzeug, ebenso auf das Ego-Fahrzeug beziehen. Die Rückkamera ist am Fahrzeug befestigt und entgegen der Fahrtrichtung des Fahrzeugs ausgerichtet. Die Rückkamera kann innerhalb der Fahrgastzelle angeordnet sein, um durch die Heckscheibe hindurch die rückwärtige Umgebung zu erfassen, oder kann an der Rückseite der Kofferraumklappe des Ego-Fahrzeugs befestigt sein. Die Rückkamera erfasst somit die rückwärtige Umgebung des Ego-Fahrzeugs und erzeugt hieraus Bilddaten. Die Bilddaten umfassen mindestens ein Bild und umfassen üblicherweise eine Bildsequenz von Bilddaten, d.h. Bilder, die in periodischen Abständen erfasst werden. Beispielsweise können die Bilder mit einer Rate von mehreren Bildern pro Sekunde erfasste werden, beispielsweise mit einer Rate von ca. 20-25 Bildern pro Sekunde. Aus einem Bild der Rückkamera kann eine statische Situation oder eine Augenblicksituation erfasst werden, beispielsweise ein Abstand, eine Position oder eine Beschaffenheit eines Objekts. Aus der Bildsequenz können ferner dynamische Situationen erfasst werden, beispielsweise eine Relativbewegung bzw. ein zeitlicher Verlauf einer Position eines Objekts. Insbesondere ermöglicht die Bildsequenz, ein Signal zu erfassen, dessen Kennzeichen eine Änderung ist, beispielsweise ein Blinklicht.

Die fahrzeugbezogenen Daten, welche erfindungsgemäß ermittelt werden, können Warnsignale sein, die akustisch oder optisch umgesetzt werden, und die eine vorbestimmte Situation kennzeichnen. Gegebenenfalls kann über die Warnung hinaus ein Signal abgegeben werden, das einen Schutzmechanismus ansteuert, beispielsweise ein Signal zu Aktivierung eines Gurtstraffers des Ego-Fahrzeugs oder ein Signal zur Aktivierung eines Airbags. Die Warnung kann beispielsweise eine Kollisionswarnung sein oder eine Warnung darüber, dass sich Objekte an einer bestimmten Stelle relativ zum Ego-Fahrzeug befinden, insbesondere an der Seite oder hinter dem Ego-Fahrzeug. Die fahrzeugbezogenen Daten sind deutlich einfacher gestaltet als die Bilddaten und können insbesondere symbolhaft oder numerisch in optischer Weise wiedergegeben werden. Dadurch kann der Fahrer eine Situation unmittelbar erfassen, ohne die ursprünglichen Bilddaten der Rückkamera selbst bewerten zu müssen. Die Bilddaten der Rückkamera können auch als Roh-Bilddaten bezeichnet werden.

Die Erfindung sieht daher ein Verfahren zur Ermittlung fahrzeugbezogener Daten vor, wobei eine Rückkamera Bilddaten erfasst. Die Rückkamera ist in die rückwärtige Umgebung des Ego-Fahrzeugs ausgerichtet. Erfindungsgemäß werden aus den Bilddaten die fahrzeugbezogenen Daten ermittelt, insbesondere durch Bildverarbeitungsschritte. Ferner werden die Bilddaten in Form mindestens eines Bildes verarbeitet oder in Form einer Bildsequenz.

Gemäß einem ersten Aspekt der Erfindung geben die fahrzeugbezogenen Daten eine örtliche Beziehung zwischen dem Ego-Fahrzeug und einem weiteren Fahrzeug wieder. Die örtliche Beziehung ist beispielsweise dadurch gegeben, dass die Rückkamera rückwärtig ausgerichtet ist und somit automatisch die Richtung angibt, in der sich das weitere Fahrzeug befindet. Es werden gemäß der Erfindung weitere Informationen über das weitere Fahrzeug ermittelt, um relevante, weitere Fahrzeuge von nicht relevanten, weiteren Fahrzeugen in der rückwärtigen Umgebung zu trennen. Im Weiteren wird ein relevantes, weiteres Fahrzeug betrachtet, das aufgrund einer Eigenschaft relevant ist, welche mittels der Rückkamera erfasst werden kann. Das weitere (relevante) Fahrzeug wird beispielsweise anhand eines Blinklichts erfasst, wobei das Blinklicht aufgrund der Bildsequenz ermittelt werden kann. Das Blinklicht kann ein Warnblinklicht oder ein Fahrtrichtungsanzeiger sein. Ein von der Rückkamera erfasstes Warnblinklicht entspricht einem Einsatzfahrzeug in der rückwärtigen Umgebung des Ego-Fahrzeugs. Ein erfasster Fahrtrichtungsanzeiger entspricht einem dem Ego-Fahrzeug nachfolgenden Fahrzeug, das einen Überholvorgang startet und somit innerhalb kurzer Zeit seitlich des Ego-Fahrzeugs fahren wird. Ein Warnblinklicht kann von einem Fahrtrichtungsanzeiger anhand der Farbe unterschieden werden und/oder anhand der Position relativ zu dem Fahrzeug, das das entsprechende Blinklicht aussendet. Als fahrzeugbezogene Daten wird hierbei die Warnung bzw. Information darüber ausgegeben, dass sich in der rückwärtigen Umgebung des Ego-Fahrzeugs ein Einsatzwagen befindet, während im Falle des Richtungsanzeigers als fahrzeugbezogene Daten die Warnung bzw. Information ausgegeben wird, dass sich relativ zum Ego-Fahrzeug ein überholendes Fahrzeug befindet. Die letztgenannten fahrzeugbezogenen Daten umfassen ferner den Hinweis darauf, dass das nachfolgende Fahrzeug sich in kurzer Zeit auf der Fahrerseite des Ego-Fahrzeugs befinden wird oder sich in dem Totwinkel des linken Außenspiegels befinden wird.

Anstatt oder in Kombination mit dem Fahrtrichtungsanzeiger kann anhand eines Bildes oder anhand einer Bildsequenz eine Radauslenkung eines Vorderrads des weiteren Fahrzeugs, d.h. des nachfolgenden Fahrzeugs, erfasst werden. Eine mittels Bilderfassung erfasste Radauslenkung hat unmittelbar zur Folge, dass das betreffende Fahrzeug d.h. das nachfolgende, weitere Fahrzeug, eine Richtungsänderung vornimmt und sich somit in kurzer Zeit neben dem Ego-Fahrzeug oder hierzu versetzt befindet. Diese Richtungsänderung wird insbesondere als Überholmanöver eingestuft, so dass die fahrzeugbezogenen Daten bei einem derartig erfassten Überholmanöver ebenso auf ein überholendes Fahrzeug hinweisen. Eine weitere Alternative zur Erfassung eines überholenden Fahrzeugs (neben der Erfassung des Fahrtrichtungszeigers oder der Radauslenkung) ist die Erfassung einer seitlichen Relativbewegung des weiteren, nachfolgenden Fahrzeugs zu einer Stelle seitlich des Ego-Fahrzeugs. Dies wird anhand einer Bildsequenz ermittelt, die von der Rückkamera erfasst wird. Die seitliche Relativbewegung entspricht einem Ausscheren, das üblicherweise mit einem Überholvorgang verknüpft ist. Anstatt einer seitlichen Relativbewegung zu einer Stelle seitlich des Ego-Fahrzeugs kann auch eine Relativbewegung auf das Ego-Fahrzeug zu erfasst werden. Eine Relativbewegung auf das Ego-Fahrzeug zu deutet auf die Möglichkeit eines bevorstehenden Auffahrunfalls hin, so dass eine Warnung über eine rückwärtige Gefahrenstelle erzeugt wird.

Zusammengefasst wird daher anhand der Bildsequenz ein Blinklicht, eine Radauslenkung eines Vorderrads, eine seitliche Relativbewegung, eine Richtungsänderung bzw. eine Relativbewegung auf das Ego-Fahrzeug zu erfasst. Anhand der derart erfassten Situationen werden entsprechende Signale als fahrzeugbezogene Daten ausgegeben, die auf eine relevante Situation in der rückwärtigen Umgebung des Ego-Fahrzeugs hinweisen. Im Einzelnen wird bei der Erfassung der Relativbewegung auf das Fahrzeug zu oder bei Erfassung des Warnblinklichts eine Warnung über eine rückwärtige Gefahrenstelle (d.h. ein auffahrendes Fahrzeug bzw. ein Einsatzfahrzeug in der rückwärtigen Umgebung) erzeugt. Insbesondere wenn eine Relativbewegung auf das Ego-Fahrzeug zu erfasst wird, wird die Warnung in Kombination mit einem Kollisionswarnsignal erzeugt. Bei Erfassung des Fahrtrichtungsanzeigers, der Radauslenkung oder der Relativbewegung, die auf ein überholendes Fahrzeug hinweisen, wird eine Information über einen bevorstehenden Überholvorgang des weiteren Fahrzeugs erzeugt. In letzterem Fall wird somit lediglich auf eine übliche, relevante Situation hingewiesen (ein überholendes Fahrzeug), wohingegen im davor genannten Fall auf eine besondere Gefahrensituation hingewiesen wird.

Weitere erfindungsgemäße Einsatzmöglichkeiten der Rückkamera sind als Toter-Winkel-Assistent bekannt, wobei die Rückkamera Objekte erfasst, die im toten Winkel der Rückspiegel liegen. Wird in den Bilddaten der Rückkamera ein entsprechendes Objekt erfindungsgemäß erfasst, das als fahrzeugbezogenes Datum anhand des Bildes oder anhand der Bildsequenz der Rückkamera ermittelt wird, dann wird ein entsprechendes Warnsignal abgegeben. Dieses Warnsignal wird vorzugsweise zusammen mit einer Richtungsangabe abgegeben, die die Relativposition des erfassten Objekts gegenüber dem Ego-Fahrzeug wiedergibt. Die sich ergebenden fahrzeugbezogenen Daten, die ein Objekt im toten Winkel der Außenspiegel wiedergeben, können mit Sensordaten kombiniert werden. Die Sensordaten können ultraschallgestützt oder mikrowellengestützt erhoben werden, insbesondere mittels eines Pulsechoverfahrens. Insbesondere kann dann ein Warnsignal abgegeben werden, wenn die Bilddaten ein Objekt in einem toten Winkel der Sensoren ermitteln. Ferner kann dann ein Warnsignal abgegeben werden, wenn anhand der Bilddaten ermittelt wird, dass sich ein Objekt an einer Position befindet, das weder von den Außenspiegeln noch von den Sensoren des Ego-Fahrzeugs erfasst werden kann. Darüber hinaus kann anhand dieses Verfahrens die Bewegung des erfassten Objekts diagnostiziert werden, wobei hierbei eine Relativgeschwindigkeit des Objekts aus den Bilddaten bzw. aus der Bildsequenz ermittelt und extrapoliert wird. Eine entsprechende Warnung kann beispielsweise für ein Zeitfenster aufrecht erhalten werden, für das prognostiziert ist, dass sich das Objekt in dem Totwinkelbereich befindet.

In einer weiteren Ausführungsform der Erfindung geben die fahrzeugbezogenen Daten eine Fahrgeschwindigkeit des Ego-Fahrzeugs wieder. Diese Fahrgeschwindigkeit gibt die Geschwindigkeit an, mit der sich das Ego-Fahrzeug gegenüber fest stehenden Verkehrsobjekten bewegt, insbesondere gegenüber Fahrbahnmarkierungen. Da die Verkehrsobjekte fest stehend bzw. statisch sind, sind die Daten, welche sich auf das Ego-Fahrzeug beziehen, gleichzeitig absolute Fahrgeschwindigkeitsdaten. Hierbei wird anhand der Bildsequenz, die die Abbildung der fest stehenden Verkehrsobjekte umfasst, die Fahrgeschwindigkeit als Relativgeschwindigkeit zwischen Ego-Fahrzeug und Fahrbahn ermittelt. Die so ermittelte Relativgeschwindigkeit zwischen Ego-Fahrzeug und Fahrbahn, die der absoluten Fahrgeschwindigkeit entspricht, wird einer Fahrzeugelektronik zur Verfügung gestellt. Insbesondere wird diese Fahrgeschwindigkeit auch angezeigt. In einer spezifischen Ausführungsform dient die so ermittelte Relativgeschwindigkeit der Plausibilisierung einer weiteren Fahrgeschwindigkeit, die auf andere Weise gewonnen wurde. In dieser spezifischen Ausführungsform wird die anhand der Bilddaten ermittelte Fahrgeschwindigkeit mit einer Fahrgeschwindigkeit kombiniert, die von Odometriegeräten des Ego-Fahrzeugs stammen, beispielsweise von einem Weggeber oder einem Drehzahlgeber am Fahrzeugantrieb.

Eine sich aus dieser spezifischen Ausführungsform ergebende Variante der Erfindung sieht vor, dass die Fahrgeschwindigkeit anhand der Bildsequenz ermittelt wird, wenn eine Geschwindigkeitsmesseinrichtung, deren Messung nicht auf den Bilddaten basiert, einen Geschwindigkeitswert unter einer Geschwindigkeitsgrenze ermittelt. Das erfindungsgemäße Verfahren, gemäß dem die Bilddaten auch zur Geschwindigkeitsmessung verwendet werden, wird somit nur bei geringen Geschwindigkeiten (d.h. unter der Geschwindigkeitsgrenze) verwendet. Die Geschwindigkeitsgrenze beträgt insbesondere 15 km/h, 10 km/h, 5 km/h oder 2 km/h. Unterhalb dieser Geschwindigkeitsgrenze ist die bilddatenbasierte Geschwindigkeitserfassung präziser als eine odometriebasierte Geschwindigkeitsmessung, die mit der Radbewegung des Ego-Fahrzeugs verknüpft ist. Daher wird der Geschwindigkeitswert der Geschwindigkeitsmesseinrichtung gemäß der Fahrgeschwindigkeit korrigiert, die anhand der Bildsequenz ermittelt wurde. Mit anderen Worten wird somit eine odometrische Geschwindigkeitserfassung des Ego-Fahrzeugs bei geringen Geschwindigkeiten (d.h. unter der Geschwindigkeitsgrenze) korrigiert. Als Voraussetzung für eine erfindungsgemäße bildbasierte Geschwindigkeitsmessung kann vorgesehen sein, dass ein Einparkassistenzsystem des Ego-Fahrzeugs aktiv ist. Da das Einparkassistenzsystem üblicherweise nur bei geringen Geschwindigkeiten aktiv sind, wird ebenso nur dann die Geschwindigkeit des Ego-Fahrzeugs anhand der Bilddaten der Rückkamera ermittelt, wenn die Geschwindigkeit unter der Geschwindigkeitsgrenze ist. Dadurch entspricht die Genauigkeit der bildbasierten Geschwindigkeitsmessung zumindest ungefähr der Genauigkeit, mit der ein Odometriegerät des Ego-Fahrzeugs die Geschwindigkeit misst. Eine hierzu alternative Ausführungsform sieht vor, dass der Geschwindigkeitswert der Geschwindigkeitsmesseinrichtung nur dann anhand der bildbasiert ermittelten Fahrgeschwindigkeit korrigiert wird, wenn der Geschwindigkeitswert der Geschwindigkeitsmesseinrichtung und/oder die bildbasiert ermittelte Fahrgeschwindigkeit unter der Geschwindigkeitsgrenze liegen. Alternativ hierzu kann vorgesehen sein, dass nur dann der Geschwindigkeitswert der Geschwindigkeitsmesseinrichtung gemäß der bildbasiert erfassten Fahrgeschwindigkeit korrigiert wird, wenn ein Einparksystem des Ego-Fahrzeugs aktiv ist.

Eine weitere Ausführungsform der Erfindung betrifft eine Verbesserung von Parkassistenzsystemen. Hierbei sind die fahrzeugbezogenen Daten, welche aus den Bilddaten der Rückkamera ermittelt werden, Konturen von fest stehenden Objekten. Die Konturen betreffen fest stehende Objekte in der Umgebung des Ego-Fahrzeugs, insbesondere fest stehende Fahrzeuge, die eine Parklücke begrenzen. Hierbei werden die Konturen der fest stehenden Objekte erfasst, um diese beim unterstützten Einparken zu berücksichtigen. Die Konturen werden daher mit Ortsdaten kombiniert, die gleichermaßen die Parklücke wiedergeben, jedoch im Gegensatz zu der erfindungsgemäßen bilddatenbasierten Erfassung mittels Sensoren eines Einparkassistenzsystems des Ego-Fahrzeugs erzeugt werden. Diese Sensoren sind insbesondere Mikrowellensensoren oder Ultraschallsensoren, die mittels eines Pulsechoverfahrens eine Parklücke ausmessen. Die Sensoren werden beim Vorbeifahren an einer Parklücke zum Ausmessen der Parklücke verwendet sowie während des Einparkens selbst, um das Ego-Fahrzeug geeignet zu der Parklücke zu orientieren. Eine Orientierung des Ego-Fahrzeugs gegenüber einer Parklücke entspricht der Orientierung des Ego-Fahrzeugs gegenüber Objekten, die die Grenzen der Parklücke definieren. Pulsechogestützte Verfahren erfassen die Parklücke beziehungsweise die entsprechenden begrenzenden Objekte auf grundsätzlich andere Weise als Bild gebende Verfahren, wie sie das erfindungsgemäße Verfahren verwendet. Daher ermöglicht eine Kombination beider Verfahren eine genauere Erfassung der Parklücke, wobei insbesondere präzise Daten über die Kontur des Objekts in die Ortsdaten einfließen, die von dem Pulsechoverfahren stammen. Gegebenenfalls kann die erfasste Kontur dazu beitragen, dass ein zusätzlicher Sicherheitsabstand zu den bereits vorhandenen Ortsdaten hinzugefügt wird. Dies ist insbesondere der Fall, wenn die Kontur einen Fehler bei Pulsechoverfahren erzeugt, beispielsweise bei schmalen hervorstehenden Konturabschnitten, die jedoch mittels Bilderfassung präziser erfasst werden können.

Eine weitere Ausführungsform der Erfindung sieht vor, dass die fahrzeugbezogenen Daten eine Relativposition eines Objekts wiedergeben, das an dem Ego-Fahrzeug befestigt ist. Ein am Ego-Fahrzeug befestigtes Objekt ist grundsätzlich zu unterscheiden von Objekten, die nicht am Ego-Fahrzeug befestigt sind, d.h. fest stehende Objekte oder Objekte in Form anderer Fahrzeuge. Die Relativposition des Objekts ist insbesondere eine Relativposition eines Anhängers, der von dem Ego-Fahrzeug gezogen wird, und kann ferner eine Relativposition eines Fahrrad-Heckträgers oder einer Dachbox sein, die bzw. der in den hinteren Bereich des Fahrzeugs hineinragt und somit von der Rückkamera erfasst wird. Im Folgenden wird insbesondere auf eine Ausführungsform Bezug genommen, bei der die fahrzeugbezogenen Daten eine Relativposition eines Anhängers wiedergeben. Hierbei wird mittels der Bildsequenz eine Auslenkung des am Ego-Fahrzeug befestigten Objekts gegenüber der Ausrichtung des Ego-Fahrzeugs verfolgt, insbesondere durch Vergleich von zeitlich aufeinander folgenden Bildern. Bei Erfassen einer oszillierenden Auslenkung wird eine Schlingerwarnung ausgegeben. Falls es sich um Objekte handelt, die üblicherweise fest mit dem Fahrzeug verbunden sind (und nicht dazu verschwenkt werden können), dann wird eine Warnung ausgegeben, wenn das Objekt sich gegenüber einer vorherigen Position bewegt. Wenn beispielsweise ein Heckträger eines Fahrrads am Ego-Fahrzeug befestigt ist und sich aufgrund mangelhafter Befestigung bewegt, so wird diese Bewegung anhand der Bildsequenz erfasst und eine entsprechend Warnung wird ausgegeben.

Eine alternative Ausführungsform dieses Aspekts betrifft eine Lenkunterstützung beim Rückwärtsfahren, d.h. Einparken, eines Gespanns bestehend aus dem Ego-Fahrzeug und mindestens einem davon gezogenen Anhänger. Im Rahmen eines Gespann-Einparkassistenzsystems wird anhand der erfindungsgemäß erfassten Auslenkung des gezogenen Anhängers relativ zum Ego-Fahrzeug ein rückwärtiger Fahrweg des Gespanns ermittelt. Hierbei wird ein Soll-Fahrweg berücksichtigt. Der Soll-Fahrweg steht insbesondere für eine Parklücke, in die rückwärts eingefahren werden soll. Hierzu steuert ein Gespann-Einparkassistenzsystem eine Lenkung des Ego-Fahrzeugs entsprechend an oder gibt Lenkinstruktionen an den Fahrer ab. Die Lenkinstruktionen können akustische, visuelle oder audiovisuelle Instruktionen sein. Mit anderen Worten wird bei dieser Ausführungsform anhand der Rückkamera erfasst, wie stark der Anhänger des Gespanns zum Fahrzeug eingeschlagen ist, wobei dies der Erfassung der Auslenkung entspricht, um den Fahrweg des Gespanns durch Lenkung am Ego-Fahrzeug geeignet zu steuern. Da die Steuerung erfindungsgemäß automatisch unterstützt ist, muss der Fahrer keine Kenntnisse über die besonderen Eigenschaften von Gespannen beim Rückwärtsfahren besitzen.

Schließlich betrifft ein Aspekt des erfindungsgemäßen Verfahrens eine weitere Komponente, die an dem Ego-Fahrzeug befestigt ist und von dieser mitgeführt wird, nämlich einen Karosserieteil. Gemäß diesem Aspekt geben die fahrzeugbezogenen Daten eine Relativposition eines Karosserieteils des Ego-Fahrzeugs wieder. Insbesondere entspricht dieser Karosserieteil einer Heckkante einer Kofferraumklappe. Hierbei ist der Karosserieteil, d.h. die Heckkante, mit der Rückkamera ausgestattet. Das heißt, dass mit dem Karosserieteil auch die Rückkamera bewegt wird. Mittels erfindungsgemäßer Bilderfassung kann der Karosserieteil geschützt werden, insbesondere vor einer unbeabsichtigten Kollision während der Schwenkbewegung des Karosserieteils gegenüber dem Ego-Fahrzeug. Mittels der Bildsequenz oder mittels des mindestens einen Bildes wird ein Abstand zu einem Hindernis der sich öffnenden Kofferraumklappe ermittelt. Ein Warnsignal oder ein Stoppsignal wird abgegeben, wenn der so ermittelte Abstand eine Abstandsgrenze unterschreitet. Die Abstandsgrenze ist, wie auch die oben beschriebene Geschwindigkeitsgrenze, vorgegeben. Dadurch wird beispielsweise vermieden, dass die Heckkante der Kofferraumklappe bei niedriger Garagendecke an diese anstößt. Dies schützt das Ego-Fahrzeug vor Schäden, insbesondere, wenn es in einer Duplexgarage mit geringer Deckenhöhe eingeparkt ist und der Kofferraumdeckel geöffnet wird.

Eine spezifische Ausführungsform hiervon sieht vor, dass die Heckklappe des Ego-Fahrzeugs von einem elektrisch ansteuerbaren Aktor geöffnet wird. Wenn das Stoppsignal erfindungsgemäß erzeugt wird, unterbricht der Aktor den Öffnungsvorgang. Dadurch wird die Abstandsgrenze eingehalten.

Dieses Warnsignal sowie auch alle anderen hier beschriebenen Warnsignale können akustische, optische oder audiovisuelle Warnsignale sein, die vorzugsweise in der Fahrgastzelle erzeugt werden. Ein optisches Warnsignal kann am Armaturenbrett, im Cockpit oder an der Frontscheibe durch ein einzelnes Element oder mittels einer entsprechenden symbolischen Anzeige innerhalb einer Gesamtanzeige, die weitere Informationen anzeigt, angezeigt werden. Ebenso können an diesen Orten numerische Daten angezeigt werden, insbesondere die Geschwindigkeit.

Eine Variante der oben beschriebenen Ausführungsform, die sich auf eine Relativposition eines Karosserieteils bezieht, sieht eine Anwendung bei selbstschließender Kofferraumklappe vor. Hierbei werden die Bilddaten, d.h. das Bild oder die Bildsequenz der Rückkamera, verwendet, um festzustellen, ob ein weiteres Objekt bzw. ein Hindernis an der Rückkamera vorliegt. Die Rückkamera befindet sich an der sich schließenden Kofferraumklappe. Wird anhand der Bilddaten der Rückkamera erfasst, dass ein Objekt, beispielsweise eine Person oder ein anderes Hindernis, mit einem Abstand geringer als ein Mindestabstand von der Rückkamera entfernt ist, dann wird der Schließvorgang unterbrochen. Alternativ hierzu kann die Kofferraumklappe immer dann automatisch geschlossen werden, sobald die Bilddaten kein Objekt innerhalb einer vorbestimmten Nähe der Rückkamera darstellen. Das automatische Schließen kann ferner mit der Bedingung verbunden sein, dass in den Bilddaten kein Objekt bzw. kein Hindernis innerhalb einer vorbestimmten Nähe für eine bestimmte Zeitdauer vorliegt.

Eine weitere Ausführungsform der Erfindung sieht vor, dass anhand der Bilddaten ein Abstand zwischen Stoßfänger des Ego-Fahrzeuges und dem Fahrbahnbelag ermittelt wird. Der Abstand zwischen Stoßfänger und Fahrbahnbelag gibt an, wie stark das Ego-Fahrzeug beladen ist bzw. ob ein geringer Reifendruck des Ego-Fahrzeugs vorliegt. Wird dieser Abstand jeweils zu beiden Seiten des Fahrzeugs erfindungsgemäß mittels der Bilddaten erfasst, so können Reifendefekte, insbesondere einseitige Reifendefekte, erkannt werden. Ferner kann eine seitliche Neigung des Ego-Fahrzeugs anhand der Bilddaten ermittelt werden, woraus auf einen einseitigen Reifendefekt geschlossen werden kann. Es wird anhand der Bilddaten ermittelt, ob das Ego-Fahrzeug einen geringen Abstand zwischen Stoßfänger und Fahrbahnbelag aufweist und somit stark beladen ist, ob das Ego-Fahrzeug eine Neigung zwischen Stoßfänger und Fahrbahnbelag aufweist und somit einseitig beladen ist, oder beides.

Eine weitere Ausführungsform der Erfindung sieht vor, dass anhand der Bilddaten ein Abstand zwischen Stoßfänger eines nachfolgenden Fahrzeugs und dem Fahrbahnbelag ermittelt wird. Der Abstand zwischen Stoßfänger und Fahrbahnbelag gibt an, wie stark das nachfolgende Fahrzeug beladen ist bzw. ob ein geringer Reifendruck in dem nachfolgenden Fahrzeug vorliegt. Wird der Abstand zu beiden Seiten des nachfolgenden Fahrzeugs erfindungsgemäß mittels der Bilddaten erfasst, so können einseitige Reifendefekte erkannt werden. Insbesondere kann eine Neigung des nachfolgenden Fahrzeugs anhand der Bilddaten ermittelt werden, wobei ebenso bei starker Neigung auf eine rückseitige Gefährdung geschlossen werden kann. Zusammenfassend wird anhand der Bilddaten ermittelt, ob das nachfolgende Fahrzeug einen geringen Abstand zwischen Stoßfänger und Fahrbahnbelag aufweist und somit stark beladen ist, ob das nachfolgende Fahrzeug eine Neigung zwischen Stoßfänger und Fahrbahnbelag aufweist und somit einseitig beladen ist, oder beides. Wird zumindest einer dieser Zustände erfasst, so wird ein Warnsignal abgegeben, da das nachfolgende Fahrzeug eine Gefährdung für das Ego-Fahrzeug darstellt.

Eine weitere Ausführungsform der Erfindung sieht vor, dass anhand eines Bildes oder einer Bildsequenz der Rückkamera eine Gischt erfasst wird, die sich durch einen Wasserbelag der Fahrbahn ergibt. Somit kann anhand der Bilddaten unter Berücksichtigung der Fahrzeuggeschwindigkeit ermittelt werden, wie groß die Aquaplaninggefahr ist bzw. wie dick der Wasserfilm ist, und ob, bezogen auf die Geschwindigkeit, eine Warnung auszugeben ist. Die fahrzeugbezogenen Daten betreffen hierbei den Zustand des Untergrunds. Eine Information, die eine Gefährdung durch die Wasserschicht angibt, kann beispielsweise an eine Fahrdynamikregelung oder ESP des Ego-Fahrzeugs übermittelt werden. Dadurch kann die Fahrdynamik bzw. ein Bremsvorgang an die Bedingungen des Fahrbelags angepasst werden. Hierdurch kann insbesondere Aquaplaning vermieden werden. In dieser Ausführungsform werden ausgehend von den Bilddaten fahrzeugbezogene Daten ermittelt, die die Rolleigenschaften des Fahrbelags betreffen.

Schließlich betrifft eine Ausführungsform der Erfindung die Erfassung von Schneematsch oder Eis aufgrund der Bilddaten. Insbesondere kann ein Bildabschnitt verwendet werden, der die Stoßfängeroberfläche wiedergibt, wobei anhand dessen Beschaffenheit auf Schneematsch- oder Eisbelag geschlossen werden kann. Anhand eines Bildes der Rückkamera, insbesondere eines Bildabschnitts, der die Stoßfängeroberfläche wiedergibt, kann dadurch auf die Funktionsfähigkeit von Abstandssensoren, insbesondere von Ultraschallsensoren, geschlossen werden. Als fahrzeugbezogene Information wird dadurch ermittelt, ob der Sensor einen Schneematsch- oder Eisbelag aufweist. Es wird davon ausgegangen, dass der Sensor aufgrund des Belags nicht korrekt funktioniert, wenn die Bilddaten der Rückkamera einen Schneematsch- oder Eisbelag wiedergeben, insbesondere auf der Stoßfängeroberfläche oder auf der Fahrbahnoberfläche. Als Beurteilungsgrundlage der Bilddaten kann hierbei die Farbe und/oder die Oberflächenbeschaffenheit, insbesondere der Stoßfängerregion, herangezogen werden, da sich durch einen Schneematsch-, Matsch- oder Eisbelag die Farbe und die Oberflächenbeschaffenheit ändert, die von der Rückkamera erfasst werden können.

Die Erfindung wird ferner realisiert mittels einer Vorrichtung zur Ermittlung fahrzeugbezogener Daten mit einer Rückkamera. Diese ist zur rückwärtigen Befestigung an einem Fahrzeug vorgesehen. Die Vorrichtung umfasst neben der Rückkamera eine Bildverarbeitungseinrichtung, vorzugsweise eine programmierbare Bildverarbeitungseinrichtung, die mit der Rückkamera verbunden ist, um von dieser mindestens ein Bild oder eine Bildsequenz zu empfangen. Die Rückkamera ist daher mit der Bildverarbeitungseinrichtung verbunden, um an diese Bilddaten zu übertragen. Die Bildverarbeitungseinrichtung ist zur Ausführung des erfindungsgemäßen Verfahrens ausgebildet, insbesondere zur Erfassung der oben stehenden Objekte oder Eigenschaften der rückwärtigen Umgebung, die von den Bilddaten der Rückkamera wiedergegeben wird.

### Kurze Beschreibung der Zeichnungen

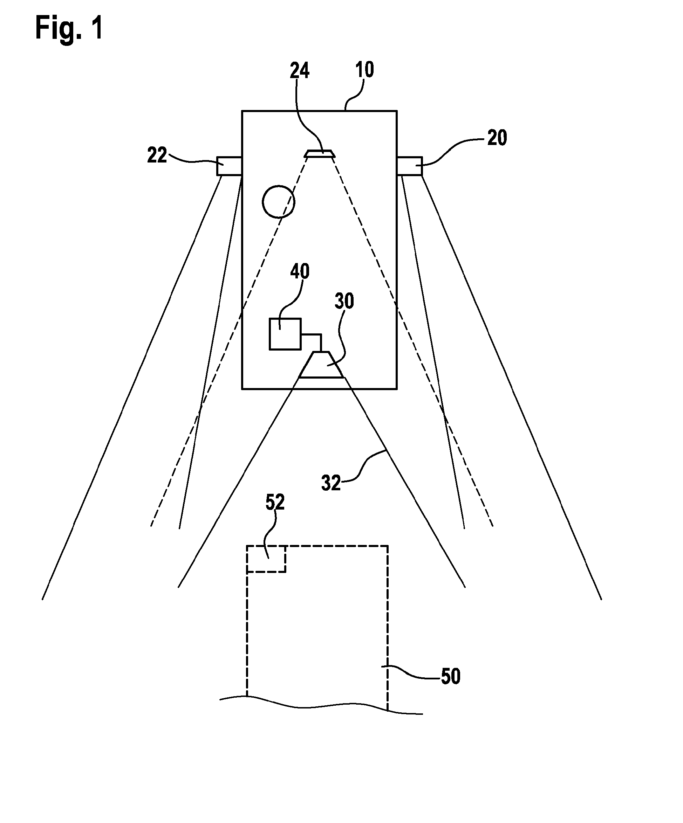

- Die Figur 1: zeigt eine beispielhafte Verkehrssituation zur Erläuterung einer spezifischen Ausführungsform des erfindungsgemäßen Verfahrens.

### Ausführungsformen der Erfindung

In der Figur 1 ist ein Fahrzeug 10 dargestellt, welches über zwei Außenspiegel 20, 22 verfügt. Darüber hinaus ist in dem Fahrzeug 10 ein Innenspiegel 24 vorgesehen, dessen Sichtbereich gestrichelt dargestellt ist. Die Sichtbereiche, die von den Außenspiegeln 20, 22 vorgesehen werden, sind mit durchgezogenen Linien dargestellt. Es ist ersichtlich, dass sich tote Bereiche ergeben, insbesondere zwischen den Erfassungsbereichen des Innenspiegels 24 und den Außenspiegeln 20, 22. Durch die Darstellung der Figur 1 als Draufsicht sind weitere blinde Bereiche nicht dargestellt, die einen Azimutalbereich in der Nähe des Fahrzeugs abdecken, insbesondere unterhalb der Heckkante des Fahrzeugs.

Das Fahrzeug 10 ist ein Ego-Fahrzeug, welches erfindungsgemäß eine Rückkamera 30 umfasst. Die Kamera 30 ermöglicht einen zusätzlichen Sichtbereich 32, der unmittelbar an das Heck des Fahrzeugs 10 angrenzt und der die Sichtbereiche der Spiegel 20-24 deutlich ergänzt. Durch seine Lage wird der Sichtbereich 32 auch als rückseitiger Sichtbereich 32 bezeichnet. Insbesondere wird von der Rückkamera die rückwärtige Umgebung des Ego-Fahrzeugs 10 erfasst, in der der Sichtbereich 32 liegt. Eine erfindungsgemäße Vorrichtung umfasst die Rückkamera 30 einschließlich einer zugehörigen erfindungsgemäßen Bildverarbeitungseinrichtung 40. Aufgrund der vielfältigen Ausgabemöglichkeiten ist die Abgabeschnittstelle der Bildverarbeitungseinrichtung 40 nicht dargestellt, welche insbesondere die Warnsignale oder andere numerischen Signale oder Steuersignale abgibt.

In der in Figur 1 dargestellten Situation befindet sich ein nachfolgendes Fahrzeug 50 innerhalb der rückwärtigen Umgebung des Ego-Fahrzeugs 10. Das nachfolgende Fahrzeug 50 befindet sich im Sichtbereich 32, so dass die Bilddaten der Rückkamera 30 diese unmittelbar erfassen. Es ist ersichtlich, dass aufgrund der Position der Rückkamera 30 diese das nachfolgende Fahrzeug 50 gründlicher erfasst, als es mit dem Rückspiegel 24 möglich ist. Die Bilddaten, die von der Rückkamera 30 vorgesehen werden, stellen somit das nachfolgende Fahrzeug 50 dar und werden von der Bildverarbeitungseinrichtung 40 verarbeitet. Bewegt sich beispielsweise das nachfolgende Fahrzeug 50 nach links, so kann dies anhand der Bildsequenz der Rückkamera 30 erfasst werden, und ein Warnsignal eines anstehenden Überholmanövers kann abgegeben werden. Gleichermaßen wird durch die Rückkamera 30 auch der vordere Blinker 52 des nachfolgenden Fahrzeugs 50 erfasst, so dass anhand der Bildsequenz (oder auch nur anhand des Bildes) der Rückkamera 30 ein bevorstehender Überholvorgang des nachfolgenden Fahrzeugs 50 erfasst werden kann. Das Blinken kann anhand der Bildsequenz erfasst werden, die das veränderliche Aussehen des Blinkers 52 wiedergibt, oder anhand eines Bildes, das den Blinker in aktivem Zustand darstellt. Im letztgenannten Fall ist es ausreichend, in einem entsprechenden Abschnitt der Bilddaten, die den Blinkerbereich 52 wiedergeben, eine Signalfarbe, beispielsweise orange, wiederzuerkennen.

Ferner ist aus der Figur 1 ersichtlich, dass die Rückkamera 30 ebenso die Fahrbahn erfasst, beispielsweise Fahrbahnmarkierungen, um anhand der Änderung von Bild zu Bild innerhalb der Bildsequenz auf die Fahrgeschwindigkeit des Fahrzeugs schließen zu können. Derartige Fahrbahnmarkierungen liegen beispielsweise an einer Stelle vor, an der sich das Fahrzeug 50 befindet. Schließlich ist aus Figur 1 ersichtlich, dass die Bilddaten, welche den Sichtbereich 32 wiedergeben, auf eine Annäherung des Fahrzeugs 50 hin untersucht werden können, um bei einer hohen Annäherungsgeschwindigkeit eine Kollisionswarnung abzugeben. Eine hohe Annäherungsgeschwindigkeit ist eine Annäherungsgeschwindigkeit, die höher als eine vorgegebene Grenze ist. Die Grenze hängt beispielsweise von der Fahrgeschwindigkeit des Ego-Fahrzeugs 10 ab.

Zudem ist ersichtlich, dass an der Stelle, an der in Figur 1 das nachfolgende Fahrzeug 50 dargestellt ist, ein Anhänger vorgesehen sein kann, der ebenso von der Rückkamera 30 erfasst wird. Der Anhänger wird von der Rückkamera 30 erfasst, da er sich im Sichtbereich 32 befindet. Hierbei kann insbesondere anhand der Bilddaten festgestellt werden, ob ein Anhänger gegenüber dem Ego-Fahrzeug 10 ausgelenkt ist, oder nicht, und ob diese Auslenkung oszilliert (d.h. pendelt), oder nicht. Da dies insbesondere eine längere Betrachtungsdauer erfordert, ist ersichtlich, dass die Erfindung nicht den Nachteil hat, den Anhänger über eine längere Zeit durch einen der Rückspiegel 20-24 betrachten zu müssen, um ein Schlingern festzustellen, wie es bei Verwendung von unverarbeiteten Bilddaten der Rückkamera der Fall ist.

Ferner ist in Figur 1 dargestellt, dass die Rückkamera 40 an der Heckkante des Fahrzeugs, d.h. an der Kofferraumklappe, angeordnet ist. Wird somit die Kofferraumklappe geöffnet, so bewegt sich auch die Rückkamera 30. Dadurch kann die Rückkamera als Abstandssensor für die Heckkante des Fahrzeugs verwendet werden. Hierbei wird, wie oben beschrieben, mittels der Rückkamera 30 ein Bild bzw. eine Bildsequenz erfasst, anhand der der Abstand zwischen einem gefährdenden Objekt und der Rückkamera 30, die sich an der Heckkante befindet, ermittelt wird. Liegt der Abstand unter einer vorbestimmten Grenze, so wird eine Kollisionswarnung ausgegeben. Vorzugsweise wird eine weitere Bewegung der Kofferraumklappe gesperrt, wenn der Abstand unter der vorbestimmten Grenze liegt.

## Patentansprüche

1. Verfahren zur Ermittlung fahrzeugbezogener Daten, wobei Bilddaten mittels einer Rückkamera (30) erfasst werden, die in eine rückwärtige Umgebung eines Ego-Fahrzeugs (10) ausgerichtet ist, und wobei aus den Bilddaten durch Verarbeitung mindestens eines Bildes der Rückkamera (30) oder einer Bildsequenz der Rückkamera (30) die fahrzeugbezogenen Daten ermittelt werden.

2. Verfahren nach Anspruch 1, wobei die fahrzeugbezogenen Daten eine örtliche Beziehung zwischen dem Ego-Fahrzeug (10) und einem weiteren Fahrzeug (50) wiedergeben, wobei entweder anhand der Bildsequenz ein Blinklicht des weiteren Fahrzeugs (50) erfasst wird, das als Warnblinklicht oder als Fahrtrichtungsanzeiger (52) ausgebildet ist, oder wobei anhand des mindestens einen Bildes oder anhand der Bildsequenz eine Radauslenkung eines Vorderrads des weiteren Fahrzeugs (50) erfasst wird, oder wobei anhand der Bildsequenz eine seitliche Relativbewegung des weiteren Fahrzeugs (50) zu einer Stelle seitlich des Ego-Fahrzeugs (10) oder eine Relativbewegung des weiteren Fahrzeugs (50) auf das Ego-Fahrzeug (10) zu erfasst wird, oder bei Erfassung des Warnblinklichts eine Warnung über eine rückwärtige Gefahrenstelle erzeugt wird, wobei insbesondere bei Erfassung der Relativbewegung auf das Ego-Fahrzeug (10) zu in Kombination mit der Warnung ein Kollisionswarnsignal erzeugt wird, oder wobei bei Erfassung des Fahrtrichtungsanzeigers, der Radauslenkung oder der Relativbewegung eine Information über einen bevorstehenden Überholvorgang des weiteren Fahrzeugs (50) erzeugt wird.

3. Verfahren nach Anspruch 1, wobei die fahrzeugbezogenen Daten eine Fahrgeschwindigkeit des Ego-Fahrzeugs (10) wiedergeben, mit der sich dieses gegenüber feststehenden Verkehrsobjekten bewegt, insbesondere gegenüber Fahrbahnmarkierungen, wobei anhand der Bildsequenz, die die Abbildung der feststehenden Verkehrsobjekte umfasst, die Fahrgeschwindigkeit als Relativgeschwindigkeit zwischen Ego-Fahrzeug (10) und Fahrbahn ermittelt wird, und die so ermittelte Relativgeschwindigkeit einer Fahrzeugelektronik zu Verfügung gestellt wird.

4. Verfahren nach Anspruch 3, wobei die Fahrgeschwindigkeit anhand der Bildsequenz ermittelt wird, wenn eine Geschwindigkeitsmesseinrichtung des Ego-Fahrzeugs (10), die zur Geschwindigkeitserfassung andere Daten als die Bilddaten verwendet, einen Geschwindigkeitswert unter einer Geschwindigkeitsgrenze ermittelt, und der Geschwindigkeitswert der Geschwindigkeitsmesseinrichtung gemäß der Fahrgeschwindigkeit korrigiert wird, die anhand der Bildsequenz ermittelt wurde.

5. Verfahren nach Anspruch 1, wobei die fahrzeugbezogenen Daten die Konturen von feststehenden Objekten in der Umgebung des Ego-Fahrzeugs (10) sind, insbesondere feststehende Fahrzeuge, die eine Parklücke begrenzen, und wobei die Konturen anhand des mindestens einen Bildes erfasst werden, wobei ferner die Konturen mit Ortsdaten kombiniert werden, die ebenso die Parklücke wiedergeben und mittels Sensoren eines Einparksystems des Ego-Fahrzeugs (10) erzeugt werden, insbesondere mittels mikrowellen- oder ultraschallgestützter Sensoren des Einparksystems des Ego-Fahrzeugs (10).

6. Verfahren nach Anspruch 1, wobei die fahrzeugbezogenen Daten eine Relativposition eines am Ego-Fahrzeugs (10) befestigten Objekts wiedergeben, insbesondere eines vom Ego-Fahrzeug (10) gezogenen Anhängers, wobei mittels der Bildsequenz eine Auslenkung des am Ego-Fahrzeugs (10) befestigten Objekts gegenüber der Ausrichtung des Ego-Fahrzeugs (10) verfolgt wird und bei Erfassen einer oszillierenden Auslenkung eine Schlinger-Warnung ausgegeben wird, oder wobei anhand der Auslenkung ein geschätzter rückwärtiger Fahrweg des Ego-Fahrzeugs und des Anhängers ermittelt wird, anhand dessen unter Berücksichtigung eines rückwärtigen Soll-Fahrwegs ein Gespann-Einparkassistenzsystem eine Lenkung des Ego-Fahrzeugs (10) ansteuert oder Lenkinstruktionen abgibt.

7. Verfahren nach Anspruch 1, wobei die fahrzeugbezogenen Daten eine Relativposition eines Karosserieteils des Ego-Fahrzeugs wiedergeben, insbesondere eine Heckkante einer Kofferraumklappe, wobei mittels der Bildsequenz oder des mindestens einen Bildes ein Abstand zu einem Hindernis des sich bewegenden Karosserieteils, beispielsweise der sich öffnenden Kofferraumklappe, ermittelt wird, und ein Warnsignal oder ein Stoppsignal abgegeben wird, wenn der Abstand eine Abstandsgrenze unterschreitet.

8. Verfahren nach Anspruch 7, wobei die Kofferraumklappe des Ego-Fahrzeugs von einem elektrisch ansteuerbaren Aktor geöffnet wird, der angesteuert wird, das Öffnen zu unterbrechen, wenn das Stoppsignal erzeugt wird.

9. Vorrichtung zur Ermittlung fahrzeugbezogener Daten mit einer Rückkamera (30), die zur rückwärtigen Befestigung an einem Fahrzeug (10) vorgesehen ist, und einer Bildverarbeitungseinrichtung (40), vorzugsweise einer programmierbaren Bildverarbeitungseinrichtung (40), die mit der Rückkamera (30) verbunden ist, um von dieser mindestens ein Bild oder eine Bildsequenz zu empfangen, wobei die Bildverarbeitungseinrichtung (40) zur Ausführung des Verfahrens nach einem der vorangehenden Ansprüche ausgebildet ist.
